# EUROPEAN PATENT APPLICATION

(11) **EP 4 645 843 A1**
(43) Date of publication of application: **05.11.2025**
(21) Application number: 25172846.5
(22) Date of filing: 28.04.2025
(51) Int. Cl.: H04N 1/00

(54) **IMAGE FORMING SYSTEM CAPABLE OF SELECTING DOCUMENT SHEET DATA TO BE OUTPUT BASED ON FEATURE IMAGE, AND DATA OUTPUT METHOD**

(30) Priority: 30.04.2024 JP 2024073311
(71) Applicant: KYOCERA Document Solutions Inc., Osaka-shi, Osaka 540-8585 (JP)
(72) Inventor: Kishi, Yoshitaka, Osaka-shi, 540-8585 (JP); Matsuki, Yoshitaka, Osaka-shi, 540-8585 (JP)
(74) Representative: Plougmann Vingtoft a/s

(57) **Abstract**

An image forming system (100) includes an acquisition processing portion (42), an acceptance processing portion (43), and an output processing portion (44). The acquisition processing portion (42) acquires feature images indicating features of respective pieces of document sheet data stored in a predetermined storage portion (24), the feature images corresponding to the respective pieces of document sheet data. The acceptance processing portion (43) causes one or a plurality of the feature images acquired by the acquisition processing portion (42) to be displayed on a predetermined mobile terminal (3), and accepts a selection operation for selecting the feature image on the mobile terminal (3). The output processing portion (44) outputs the document sheet data corresponding to the feature image selected by the selection operation.

## Description

### BACKGROUND

The present disclosure relates to an image forming system and a data output method.

An image forming apparatus which stores document sheet data read from a document sheet in a storage portion is known. There is also known an image forming apparatus which causes a thumbnail image of each piece of the document sheet data stored in the storage portion to be displayed on a display portion, and outputs the document sheet data corresponding to the selected thumbnail image in accordance with an operation of selecting the displayed thumbnail image.

### SUMMARY

An image forming system according to an aspect of the present disclosure includes an acquisition processing portion, an acceptance processing portion, and an output processing portion. The acquisition processing portion acquires feature images indicating features of respective pieces of document sheet data stored in a predetermined storage portion, the feature images corresponding to the respective pieces of document sheet data. The acceptance processing portion causes one or a plurality of the feature images acquired by the acquisition processing portion to be displayed on a predetermined mobile terminal, and accepts a selection operation for selecting the feature image on the mobile terminal. The output processing portion outputs the document sheet data corresponding to the feature image selected by the selection operation.

A data output method according to another aspect of the present disclosure is executed in an image forming system and includes an acquisition step, an acceptance step, and an output step. The acquisition step includes acquiring feature images indicating features of respective pieces of document sheet data stored in a predetermined storage portion, the feature images corresponding to the respective pieces of document sheet data. The acceptance step includes causing one or a plurality of the feature images acquired in the acquisition step to be displayed on a predetermined mobile terminal, and accepting a selection operation for selecting the feature image on the mobile terminal.
The output step includes outputting the document sheet data corresponding to the feature image selected by the selection operation.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a block diagram showing a configuration of an image forming system according to an embodiment of the present disclosure;
Fig. 2 is a block diagram showing a configuration of an image forming apparatus in the image forming system according to the embodiment of the present disclosure;
Fig. 3 is a block diagram showing a configuration of a server in the image forming system according to the embodiment of the present disclosure;
Fig. 4 is a block diagram showing a configuration of a mobile terminal in the image forming system according to the embodiment of the present disclosure; and
Fig. 5 is a flowchart illustrating an example of document sheet data output processing executed in the image forming system according to the embodiment of the present disclosure.

### DETAILED DESCRIPTION

Hereinafter, an embodiment of the present disclosure will be described with reference to the attached drawings. It is noted that the following embodiment is an example of embodying the present disclosure and does not limit the technical scope of the present disclosure.

### [Configuration of image forming system 100]

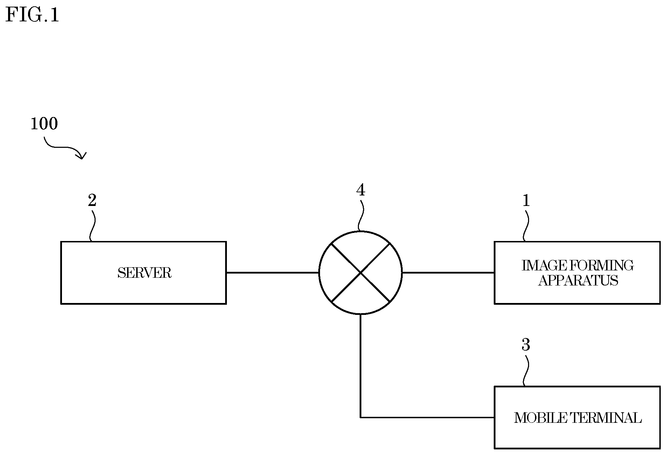

First, a configuration of an image forming system 100 according to the embodiment of the present disclosure will be described with reference to Fig. 1.

As shown in Fig. 1, the image forming system 100 includes an image forming apparatus 1, a server 2, and a mobile terminal 3. In the image forming system 100, the image forming apparatus 1, the server 2, and the mobile terminal 3 are each connected to a communication network 4. The image forming apparatus 1 and the server 2 are capable of communicating with each other via the communication network 4. Furthermore, the image forming apparatus 1 and the mobile terminal 3 are capable of communicating with each other via the communication network 4. For example, the communication network 4 is the Internet or a LAN (Local Area Network).

### [Configuration of image forming apparatus 1]

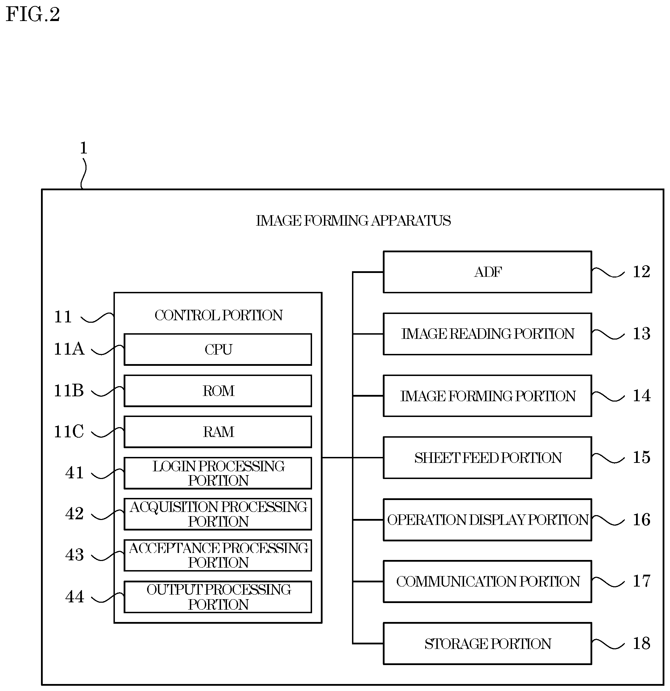

Next, a configuration of the image forming apparatus 1 will be described with reference to Fig. 2.

The image forming apparatus 1 is a multifunction peripheral having a plurality of functions such as a facsimile function and a copying function along with a scanning function for reading an image from a document sheet and a printing function for forming an image on a sheet based on image data. It is noted that the image forming apparatus 1 may be a printer, a facsimile apparatus, or a copying machine.

As shown in Fig. 2, the image forming apparatus 1 includes a control portion 11, an ADF (Auto Document Feeder) 12, an image reading portion 13, an image forming portion 14, a sheet feed portion 15, an operation display portion 16, a communication portion 17, and a storage portion 18.

The control portion 11 collectively controls the image forming apparatus 1. As shown in Fig. 2, the control portion 11 includes a CPU 11A, a ROM 11B, and a RAM 11C. The CPU 11A is a processor that executes various types of arithmetic processing. The ROM 11B is a nonvolatile storage device in which information such as control programs for causing the CPU 11A to execute various types of processing is stored in advance. The RAM 11C is a volatile or nonvolatile storage device that is used as a temporary storage memory (working area) for the various types of processing to be executed by the CPU 11A. The CPU 11A executes the various control programs stored in advance in the ROM 11B. Thus, the CPU 11A collectively controls the image forming apparatus 1.

The ADF 12 conveys a document sheet from which an image is to be read by the image reading portion 13. The ADF 12 includes a document sheet setting portion, a plurality of conveying rollers, a document sheet holder, and a sheet discharge portion.

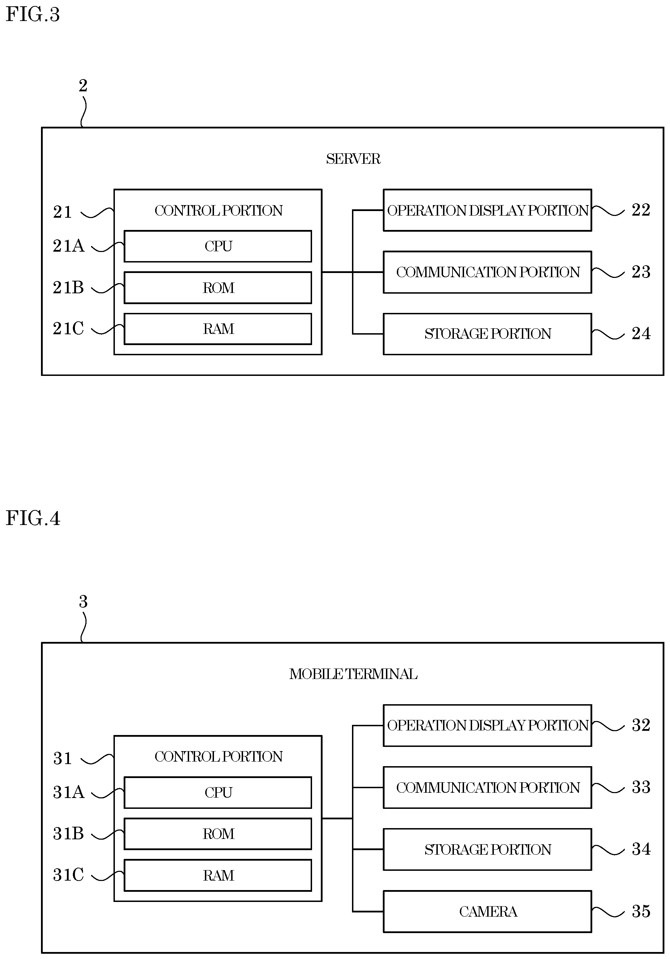

The image reading portion 13 realizes the scanning function. The image reading portion 13 includes a document sheet table, a light source, a plurality of mirrors, an optical lens, and a CCD. In the image forming system 100, document sheet data read from a document sheet using the scanning function is stored in a storage portion 24 (see Fig. 3) of the server 2.

The image forming portion 14 realizes the printing function. For example, the image forming portion 14 forms a color or monochrome image on a sheet supplied by the sheet feed portion 15 using electrophotography. For example, the image forming portion 14 includes a plurality of image forming units, a laser scanning unit, an intermediate transfer belt, a secondary transfer roller, a fixing device, and a sheet discharge tray. It is noted that the image forming portion 14 may form an image on a sheet supplied by the sheet feed portion 15 by other image forming methods such as an inkjet method.

The sheet feed portion 15 supplies sheets to the image forming portion 14. The sheet feed portion 15 includes a sheet feed cassette, a manual feed tray, and a plurality of conveying rollers.

The operation display portion 16 is a user interface of the image forming apparatus 1. The operation display portion 16 includes a first display portion and a first operation portion. The first display portion displays various types of information in response to control instructions from the control portion 11. For example, the first display portion is a flat panel display such as a liquid crystal display. The first operation portion is used to input various types of information to the control portion 11 according to user operations. For example, the first operation portion includes an operation key and a touch panel.

The communication portion 17 is a communication interface that executes wired or wireless data communication with external communication devices such as the server 2 and the mobile terminal 3 via the communication network 4.

The storage portion 18 is a nonvolatile storage device. For example, the storage portion 18 is a storage device such as a nonvolatile memory such as a flash memory, an SSD (Solid-State Drive), and an HDD (Hard Disk Drive).

Account information corresponding to each user of the image forming apparatus 1 is stored in advance in the storage portion 18. The account information includes identification information of the user of the image forming apparatus 1, such as a user name, and a password.

Further, the mobile terminal 3 possessed by the user of the image forming apparatus 1 is registered in advance in the image forming apparatus 1. Specifically, in the image forming apparatus 1, the terminal identification information of the mobile terminal 3 possessed by the user of the image forming apparatus 1 is associated in advance with the account information. For example, the terminal identification information of the mobile terminal 3 is a MAC address of the mobile terminal 3.

Furthermore, an authentication program for authenticating the user of the image forming apparatus 1 is stored in advance in the storage portion 18. The CPU 11A of the control portion 11 executes the authentication program to function as a login processing portion 41 shown in Fig. 2.

The login processing portion 41 allows the user to log in to the image forming apparatus 1 .

For example, when a user operation is accepted in the operation display portion 16, the login processing portion 41 causes the operation display portion 16 to display an authentication screen used for authenticating the user. In the authentication screen, a user operation for inputting the identification information and password of the user is accepted.

When information is input by the user operation in the authentication screen, the login processing portion 41 determines whether or not the input information matches any of the account information stored in the storage portion 18. Then, when the information input in the authentication screen matches any of the account information stored in the storage portion 18, the login processing portion 41 determines that the authentication has succeeded and allows the user to log in to the image forming apparatus 1.

It is noted that the login processing portion 41 executes logout processing to log out the currently logged-in user when a predetermined logout operation is performed in the operation display portion 16, when a preset time has elapsed, or when another user is to log in.

### [Configuration of server 2]

Next, a configuration of the server 2 will be described with reference to Fig. 3.

The server 2 is a storage server in which the document sheet data is stored.

As shown in Fig. 3, the server 2 includes a control portion 21, an operation display portion 22, a communication portion 23, and a storage portion 24.

The control portion 21 collectively controls the server 2. As shown in Fig. 3, the control portion 21 includes a CPU 21A, a ROM 21B, and a RAM 21C. The CPU 21A, the ROM 21B, and the RAM 21C have functions similar to those of the CPU 11A, the ROM 11B, and the RAM 11C of the image forming apparatus 1.

The operation display portion 22 is a user interface of the server 2. The operation display portion 22 includes a second display portion and a second operation portion. The second display portion displays various types of information in response to control instructions from the control portion 21. For example, the second display portion is a flat panel display such as a liquid crystal display. The second operation portion is used to input various types of information to the control portion 21 according to user operations. For example, the second operation portion includes a keyboard, a mouse, and a touch panel.

The communication portion 23 is a communication interface that executes wired or wireless data communication with an external communication device such as the image forming apparatus 1 via the communication network 4.

The storage portion 24 is a nonvolatile storage device similar to the storage portion 18 of the image forming apparatus 1.

The storage portion 24 stores the document sheet data transmitted from the image forming apparatus 1. The storage portion 24 of the server 2 is an example of a storage portion according to the present disclosure. It is noted that the storage portion 24 may also store the document sheet data transmitted from other image forming apparatuses 1.

### [Configuration of mobile terminal 3]

Next, a configuration of the mobile terminal 3 will be described with reference to Fig. 4.

The mobile terminal 3 is a mobile information processing apparatus possessed by the user of the image forming apparatus 1. For example, the mobile terminal 3 is a smartphone or a tablet terminal.

As shown in Fig. 4, the mobile terminal 3 includes a control portion 31, an operation display portion 32, a communication portion 33, a storage portion 34, and a camera 35.

The control portion 31 collectively controls the mobile terminal 3. As shown in Fig. 4, the control portion 31 includes a CPU 31A, a ROM 31B, and a RAM 31C. The CPU 31A, the ROM 31B, and the RAM 31C have functions similar to those of the CPU 11A, the ROM 11B, and the RAM 11C of the image forming apparatus 1.

The operation display portion 32 is a user interface of the mobile terminal 3. The operation display portion 32 includes a third display portion and a third operation portion. The third display portion displays various types of information in response to control instructions from the control portion 31. For example, the third display portion is a flat panel display such as a liquid crystal display. The third operation portion is used to input various types of information to the control portion 31 according to user operations. For example, the third operation portion includes a touch panel and an operation key.

The communication portion 33 is a communication interface that executes wired or wireless data communication with an external communication device such as the image forming apparatus 1 via the communication network 4.

The storage portion 34 is a nonvolatile storage device similar to the storage portion 18 of the image forming apparatus 1.

The camera 35 is used to capture an image of a subject.

Incidentally, there is known an image forming apparatus which causes the operation display portion 16 to display thumbnail images of the respective pieces of document sheet data stored in the storage portion 18, and outputs, according to an operation of selecting the displayed thumbnail image, the document sheet data corresponding to the selected thumbnail image.

Herein, the image forming apparatus may not include a display portion that is capable of displaying a feature image indicating a feature of the document sheet data, such as the thumbnail image.

In contrast, in the image forming system 100 according to the embodiment of the present disclosure, the document sheet data to be output can be selected based on the feature image irrespective of the configuration of the display portion of the image forming apparatus 1 as will be described below.

Specifically, a document sheet data output program for causing the control portion 11 to function as an acquisition processing portion 42, an acceptance processing portion 43, and an output processing portion 44 shown in Fig. 2 is stored in advance in the storage portion 18 of the image forming apparatus 1. The CPU 11A of the control portion 11 executes the document sheet data output program to function as the respective processing portions described above. It is noted that the image forming apparatus 1 may be an example of the image forming system according to the present disclosure.

It is noted that some or all of the processing portions included in the control portion 11 of the image forming apparatus 1 may each be constituted of an electronic circuit. Further, the authentication program and the document sheet data output program may be programs for causing a plurality of processors to function as the respective processing portions shown in Fig. 2.

The acquisition processing portion 42 acquires the feature images respectively corresponding to the respective pieces of document sheet data stored in the storage portion 24 of the server 2.

For example, the feature image is the thumbnail image of the document sheet data.

Specifically, when a predetermined operation by a user currently logged in to the image forming apparatus 1 is accepted, the acquisition processing portion 42 acquires each piece of the document sheet data stored in the storage portion 24 of the server 2. Then, the acquisition processing portion 42 generates the thumbnail images corresponding to the respective pieces of document sheet data based on the respective pieces of document sheet data acquired from the storage portion 24. For example, the acquisition processing portion 42 reduces an image of a first page of the document sheet data to a predetermined size and adds file name information of the document sheet data below the reduced image, to generate the thumbnail image.

It is noted that the feature image may be a feature document image that indicates a feature of the document sheet data by document data. In this case, when the document sheet data is document data, the acquisition processing portion 42 only needs to execute character recognition processing for recognizing characters included in the document sheet data and execute processing of extracting an abstract on text data acquired by executing the character recognition processing, to thus acquire an image showing the extracted abstract as the feature image. A well-known method that uses Al only needs to be used as the method of extracting an abstract from text data. Furthermore, when the document sheet data is photographic data, the acquisition processing portion 42 only needs to execute object recognition processing for recognizing an object included in the document sheet data and verbalizing the recognition result, and acquire an image showing the execution result of the object recognition processing (the verbalized recognition result) as the feature image. The object recognition processing only needs to be realized by a well-known method that uses Al.

Moreover, the acquisition processing portion 42 may cause the server 2 or another image forming apparatus to generate the feature image.

The acceptance processing portion 43 causes the mobile terminal 3 to display one or a plurality of the feature images acquired by the acquisition processing portion 42, and accepts a selection operation for selecting the feature image on the mobile terminal 3.

For example, when the feature images corresponding to the respective pieces of document sheet data are acquired by the acquisition processing portion 42, the acceptance processing portion 43 causes the operation display portion 32 of the mobile terminal 3 to display a selection screen to be used for the selection operation. In the selection screen, each of the feature images acquired by the acquisition processing portion 42 is displayed in a selectable manner.

For example, a display control program for causing the operation display portion 32 to display the selection screen in response to an instruction from the acceptance processing portion 43 and for causing information indicating the feature image selected by the selection operation to be input to the acceptance processing portion 43 is stored in advance in the storage portion 34 of the mobile terminal 3. By executing the display control program, the control portion 31 of the mobile terminal 3 can cause the operation display portion 32 to display the selection screen in response to an instruction from the acceptance processing portion 43, and input information indicating the feature image selected by the selection operation to the acceptance processing portion 43.

Then, the acceptance processing portion 43 instructs the mobile terminal 3 corresponding to the user currently logged in to the image forming apparatus 1 to display the selection screen, to thus cause the operation display portion 32 of the mobile terminal 3 to display the selection screen. Furthermore, the acceptance processing portion 43 recognizes the feature image selected by the selection operation based on the information indicating the feature image selected by the selection operation, that is input from the mobile terminal 3.

It is noted that when the feature images corresponding to the respective pieces of document sheet data are acquired by the acquisition processing portion 42, the acceptance processing portion 43 may generate a web page used for the selection operation and cause the operation display portion 16 to display a two-dimensional code such as a QR code that includes a URL for accessing the web page. In this case, the user of the image forming apparatus 1 only needs to photograph the two-dimensional code displayed on the operation display portion 16 using the camera 35 of the mobile terminal 3 that the user possesses. Furthermore, when the two-dimensional code is photographed by the camera 35, the control portion 31 of the mobile terminal 3 only needs to acquire a URL included in the two-dimensional code from the photographed two-dimensional code, and cause the operation display portion 32 to display the web page using the acquired URL. In other words, when the two-dimensional code is photographed by the camera 35 of the mobile terminal 3, the acceptance processing portion 43 may cause the mobile terminal 3 to display the web page including one or a plurality of the feature images acquired by the acquisition processing portion 42, and accept the selection operation on the mobile terminal 3.

Further, the image forming apparatus 1 may be capable of executing wireless communication with the mobile terminal 3 according to a predetermined communication standard. For example, the communication standard is NFC (Near Field Communication) (ISO/IEC18092). It is noted that the communication standard is not limited to NFC and only needs to be a standard with which direct wireless communication with the image forming apparatus 1 can be executed without using other communication devices, such as Bluetooth. In this case, the acceptance processing portion 43 may transmit a URL for accessing the web page to the mobile terminal 3 that is present within a communication range of the communication standard.

The output processing portion 44 outputs the document sheet data corresponding to the feature image selected by the selection operation.

For example, the output processing portion 44 uses the image forming portion 14 to execute print processing for printing the document sheet data corresponding to the feature image selected by the selection operation.

For example, the output processing portion 44 may transmit the document sheet data corresponding to the feature image selected by the selection operation to a predesignated transmission destination.

### [Document sheet data output processing]

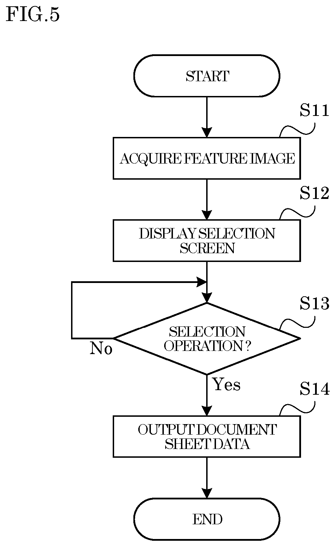

Hereinafter, with reference to Fig. 5, a data output method according to the present disclosure will be described along with exemplary procedures of document sheet data output processing executed by the control portion 11 of the image forming apparatus 1. Herein, Step S11, Step S12, ... represent numbers of processing procedures (steps) executed by the control portion 11. It is noted that the document sheet data output processing is executed when an instruction to display the selection screen is input by the user currently logged in to the image forming apparatus 1.

### <Step S11>

First, in Step S11, the control portion 11 acquires the feature images corresponding to the respective pieces of document sheet data stored in the storage portion 24 of the server 2. The processing of Step S11 is an example of an acquisition step according to the present disclosure and is executed by the acquisition processing portion 42 of the control portion 11.

Specifically, the control portion 11 acquires each piece of the document sheet data stored in the storage portion 24 of the server 2. Then, based on the respective pieces of document sheet data acquired from the storage portion 24, the control portion 11 generates the thumbnail images corresponding to the respective pieces of document sheet data.

### <Step S12>

In Step S12, the control portion 11 causes the operation display portion 32 of the mobile terminal 3 to display the selection screen including the one or plurality of feature images acquired by the processing of Step S11. The processing of Step S12 is an example of an acceptance step according to the present disclosure and is executed by the acceptance processing portion 43 of the control portion 11.

Specifically, the control portion 11 instructs the mobile terminal 3 corresponding to the user currently logged in to the image forming apparatus 1 to display the selection screen.

### <Step S13>

In Step S13, the control portion 11 determines whether or not the selection operation has been accepted in the selection screen.

Specifically, the control portion 11 determines that the selection operation has been accepted when information indicating the feature image selected by the selection operation is input from the mobile terminal 3 corresponding to the user currently logged in to the image forming apparatus 1.

Herein, when determining that the selection operation has been accepted in the selection screen (Yes in S13), the control portion 11 shifts the processing to Step S14. On the other hand, when determining that the selection operation has not been accepted in the selection screen (No in S13), the control portion 11 waits for the acceptance of the selection operation in Step S13.

### <Step S14>

In Step S14, the control portion 11 outputs the document sheet data corresponding to the feature image selected by the selection operation. The processing of Step S14 is an example of an output step according to the present disclosure and is executed by the output processing portion 44 of the control portion 11.

Specifically, the control portion 11 uses the image forming portion 14 to execute the print processing for printing the document sheet data corresponding to the feature image selected by the selection operation.

In this manner, in the image forming system 100, the one or plurality of feature images acquired by the acquisition processing portion 42 is/are displayed on the operation display portion 32 of the mobile terminal 3, and the selection operation is accepted on the mobile terminal 3. Therefore, the document sheet data to be output can be selected based on the feature image irrespective of the configuration of the display portion of the image forming apparatus 1.

It is noted that document sheet data read from a document sheet using the scanning function may be stored in the storage portion 18 of the image forming apparatus 1. The storage portion 18 is another example of the storage portion according to the present disclosure. In this case, the image forming system 100 does not need to include the server 2.

### [Notes of disclosure]

Hereinafter, a general outline of the disclosure extracted from the embodiment described above will be noted. It is noted that the respective configurations and processing functions described in the notes below can be sorted and arbitrarily combined as appropriate.

### <Note 1>

An image forming system, including: an acquisition processing portion which acquires feature images indicating features of respective pieces of document sheet data stored in a predetermined storage portion, the feature images corresponding to the respective pieces of document sheet data; an acceptance processing portion which causes one or a plurality of the feature images acquired by the acquisition processing portion to be displayed on a predetermined mobile terminal, and accepts a selection operation for selecting the feature image on the mobile terminal; and an output processing portion which outputs the document sheet data corresponding to the feature image selected by the selection operation.

### <Note 2>

The image forming system according to note 1, in which the feature image includes a thumbnail image of the document sheet data.

### <Note 3>

The image forming system according to note 1 or 2, in which the feature image includes a feature document image indicating the feature of the document sheet data.

### <Note 4>

A data output method executed in an image forming system, including: an acquisition step of acquiring feature images indicating features of respective pieces of document sheet data stored in a predetermined storage portion, the feature images corresponding to the respective pieces of document sheet data; an acceptance step of causing one or a plurality of the feature images acquired in the acquisition step to be displayed on a predetermined mobile terminal, and accepting a selection operation for selecting the feature image on the mobile terminal; and an output step of outputting the document sheet data corresponding to the feature image selected by the selection operation.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image forming system (100), comprising:
an acquisition processing portion (42) which acquires feature images indicating features of respective pieces of document sheet data stored in a predetermined storage portion (24), the feature images corresponding to the respective pieces of document sheet data;
an acceptance processing portion (43) which causes one or a plurality of the feature images acquired by the acquisition processing portion (42) to be displayed on a predetermined mobile terminal (3), and accepts a selection operation for selecting the feature image on the mobile terminal (3); and
an output processing portion (44) which outputs the document sheet data corresponding to the feature image selected by the selection operation.

2. The image forming system (100) according to claim 1, wherein
the feature image includes a thumbnail image of the document sheet data.

3. The image forming system (100) according to claim 1 or 2, wherein
the feature image includes a feature document image indicating the feature of the document sheet data.

4. A data output method executed in an image forming system (100), comprising:
an acquisition step of acquiring feature images indicating features of respective pieces of document sheet data stored in a predetermined storage portion (24), the feature images corresponding to the respective pieces of document sheet data;
an acceptance step of causing one or a plurality of the feature images acquired in the acquisition step to be displayed on a predetermined mobile terminal (3), and accepting a selection operation for selecting the feature image on the mobile terminal (3); and
an output step of outputting the document sheet data corresponding to the feature image selected by the selection operation.
